(19)

Europäisches Patentamt

European Patent Office

Office européen des brevets

(11) **EP 4 057 228 A1**

(12) **EUROPEAN PATENT APPLICATION**

(43) Date of publication:
**14.09.2022 Bulletin 2022/37**

(21) Application number: **21161894.7**

(22) Date of filing: **10.03.2021**

(51) International Patent Classification (IPC):
***G06T 11/00*** *(2006.01)*

(52) Cooperative Patent Classification (CPC):
**G06T 11/001**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Mindtech Global Limited Brighton BN1 1HG (GB)**

(72) Inventors:
 • **MALEK, Ali**
  **Brighton, BN1 1HG (GB)**

 • **McGUINNESS, Peter**
  **Brighton, BN1 1HG (GB)**

(74) Representative: **Fresh IP**
 **WeWork.**
 **50-60 Station Road**
 **Cambridge CB1 2JH (GB)**

Remarks:
Amended claims in accordance with Rule 137(2) EPC.

(54) **IMAGE DOMAIN MATCHING TECHNIQUE**

(57)    A processing of enhancing the quality of images, wherein a style transfer is performed on a content image using, as a basis, a selected style image. The style image used in the style transfer is selected from a number of candidate style images, each having an associated similarity parameter representative of the degree of similarity with the content image. The selected style image is that candidate style image having a similarity parameter for which the similarity between style image and content image is highest.

Figure 3

**Description**

TECHNICAL FIELD

The present disclosure relates to the creation and processing of images based on one or more datasets defining virtual entities such as objects, persons, settings and environments.

In particular, this disclosure relates to the generation and multiple dimensional provision of realistic and photorealistic images of a virtual world represented by synthetic datasets. The use of highly realistic imaging facilitates an enhanced user experience of the virtual environments being depicted. Real time provision of such images allows the user to interact with the virtual objects and surroundings, thereby providing an immersive and dynamic experience resembling a video.

The images referred to in this disclosure may be deployed in numerous applications, including gaming, entertainment, design, architecture, aviation, planning, training, education, medicine, security, defence, etc.

BACKGROUND OF THE INVENTION

In order to enhance the realism in the images, the data relating to the virtual objects, places and environments, as provided by content data ("content datasets"), which may be synthetic datasets, may be modified by the use of styles datasets or style overlays. Without such modification, the images provided by content data alone may be considered "raw" in the sense that objects or environments in the images may lack sufficient or appropriate texture, colouring, shading, or indeed precise shape or form, causing the images rendered to be "flat", simplistic and unconvincing to the user, and the user experience is inevitably very limited.

By modifying the content data with style data, the realism in the final images can be greatly improved and the user experience considerably enhanced. A generalised street scene depicting the basic simple geometries of objects and surroundings in a street, if so modified, can be transformed by the style data into a photorealistic street scene, complete with buildings, cars, street furniture and pedestrians, each of which is rendered in realistic textures, colours, shades and hues. Moreover, different styles applied to the same content data will cause different environments to be portrayed in the modified street scene eg one could apply an Indian style image or a German style image to the same content data depicting a generalised street scene, and the stylised content data would render an image of a street in India or a street in Germany.

The application of the style data to content data, or "style transfer", is based on conventional processes which typically (but not exclusively) use neural network architecture, comprising an "autoencoder", working on an annotated content image and an annotated style image, ie the pixels within each image being annotated, or labelled, inter alia by what they display. In the street scene example, a pixel may be labelled as a pixel for a car or a pixel for a pedestrian etc. The autoencoder has two major parts: an "encoder", which down-samples a given output in both the content image and style image to produce a compact "feature vector" for each, and a "decoder" which up-samples the compact feature vector of the original input images. The compact feature vector contains "compacted" data from the source image and thereby "preserves", subject to some loss, the bulk of the original pixel data from the source.

The reader is referred to a background publication which sets out a summary of a conventional style transfer: "A Closed-form Solution to Photorealistic Image Stylization" by Yijun Li and others, University of California, 27 July 2018.

In conventional systems the style transfer occurs on the output of the encoder, wherein certain attributes of the style feature vector are assumed (or replaced) by the content feature vector. The two feature vectors are subject to one or more transforming operations which perform "domain matching" on them: regions in the content image are paired with regions with the same annotation (or label) as the style image, and then each regional content-style pair is analysed for areal similarity ie having comparable areas, or, in practice, having a comparable number of pixels. If a regional pair meets the areal similarity condition, then the processor "transfers" (see explanation below of style transfer) the style of that region in the style image to the corresponding region in the content image. However, in conventional systems the similarity test has a binary outcome in each region: either the style is transferred in that region or no transfer occurs and region in the content image is unchanged.

Once the content feature vector has assumed the new attributes it may be up-sampled to generate the "stylised content image".

There are problems associated with the domain matching as described above for conventional systems. Firstly, it relies on full annotation in the style image, ie that all pixels are labelled, and, secondly, that corresponding regions, if they can be set up, based on the annotations, are of comparable area and pass the similarity test. If labels are missing, or if the regional pair fails the areal similarity test, the style transfer will not occur for that region. For these reasons, style transfer may occur only in limited parts of the content image, leading to non-uniform occurrence of style transfer across the content image, in effect a partial style transfer, which is clear unsatisfactory.

In the light of the above, it will be evident to the reader that conventional processes work best when the corresponding regions on both content and style images possess approximately the same number of pixels, which will not be the generally the case. This is a further shortcoming of conventional approaches.

The above problems are exacerbated by the practice of matching a content image to a single style image dataset. In this case, it is particularly unlikely that the domain matching by annotation will result in a viable number of content-style regions which also satisfy the similarity criterion.

By applying such domain matching techniques to entire content images and entire style images, the entire content data and entire style data will pass through the autoencoders at least once for each class of entity. The down-sampling and upsampling at each passage through an autoencoders is imperfect and produces errors ("artefacts"), which will proliferate with the number of autoencoder passages, as explained in later passages herein.

TECHNICAL OBJECTIVE

The reader will appreciate that there is a need for a method and corresponding arrangement which overcomes the shortcomings described above. Various aspects of the apparatus and method in this disclosure address these drawbacks, providing enhanced performance benefits, are discussed herein.

As will be apparent from this disclosure (see below), it is an objective of the current invention to provide a method and arrangement to enhance style transfer techniques and thereby produce style images with improved realism. An object of the method and arrangement of this disclosure is to optimise the number of content-style regions resulting from domain matching between content data and style data, as well as an improved style transfer to the content image.

It is a further objective of the current invention to provide a method and arrangement of domain matching which facilitates an increased proportion of content-style regional pairs passing the similarity test. It is a yet further objective to reduce the number of artefacts arising in domain matching.

Further objectives and advantages of the invention will be apparent on consideration of the operation and workings of the apparatus and method disclosed herein.

BRIEF DESCRIPTION OF THE INVENTION

This disclosure relates to a novel and inventive apparatus and method for enhancing domain matching techniques for style transfer and reducing the number of artefacts in stylised images. Further details of style transfer are set out in a later passage.

In accordance with an embodiment of the invention a method and arrangement of multi style domain matching is herein disclosed, wherein multiple style images are provided for a given content.

In accordance with an embodiment of the invention a method and arrangement of domain matching is disclosed wherein the similarity between the content image and multiple style images in the style dataset is determined, and wherein the style image which is determined to be most similar to the content image is selected to be the basis for the style transfer to the content image. The similarity determination may also be applied to regional content-style pairs (see above), ie parts of an image rather than the image in its entirety, such that a selection of style image (a region thereof) is made in respect of each region: in accordance with an aspect of a method and arrangement of the invention, the similarity test and the resulting selection may be applied to any pairs of sets or subsets of pixels respectively in content image datasets and style image datasets, irrespective of the location in the respective images, of the relevant pixels, for which there may be no spatial correspondence.

In accordance with an aspect of the invention a method and arrangement disclosed herein, whereby, for every semantically labelled region on the content image, there are multiple candidate style images in the style dataset.

According to an aspect of a method and arrangement of the invention disclosed herein, selection of style data from multiple candidate style data for style transfer, and the resulting style transfer, may occur on a regional basis (in respect of any selected parts, regions, sectors, quadrants, etc of the content image, rather than in respect of the whole content image): a part of a content image may be regarded as just another content image.

BRIEF DESCRIPTION OF THE FIGURES

Numerous aspects, implementations, objects and advantages of the present invention will be apparent upon consideration of the detailed description herein, taken in conjunction with the drawings, in which like reference characters refer to like parts throughout.

FIG. 1 illustrates an exemplary aspect of the arrangement according to the invention;

FIG. 2 shows an exemplary aspect of the method and arrangement according to the invention and its results on style transfer;

FIG. 3 illustrates a method of domain matching in accordance with various exemplary aspects and implementations disclosed herein;

FIG. 4 illustrates an exemplary aspect of the method and arrangement according to the invention and its results on style transfer;

FIG. 5 illustrates a method of domain matching in accordance with various exemplary aspects and implementations disclosed herein;

DETAILED DESCRIPTION OF THE FIGURES AND EMBODIMENTS

Reference will be made in detail to examples and embodiments of the invention, one or more of which are illustrated in the drawings, the examples and embodiments being provided by way of explanation of the invention, not limitation of the invention. It will be apparent that various modifications and variations can be made in the present invention without departing from the scope of the invention as defined in the claims. Clearly, features illustrated or described as part of one embodiment can be used with another embodiment to yield a still further embodiment. It is intended that the present invention covers such modifications and variations as come within the scope of the appended claims and their equivalents.

Various embodiments, aspects and implementations of the present invention, as well as technical objectives and advantages will be apparent to those skilled in the art, upon consideration of the description herein, in combination with the drawings. Unless indicated otherwise by the context, the terms "first", "second", "third", "last", etc are used herein merely to distinguish one component from another, and are not intended to define or limit the position, location, alignment or importance of the components specified. The singular forms "a", "an", and "the" include plural references, unless, based on the context, this is clearly not the case.

An exemplary aspect of the present disclosure is directed to a process for applying style images $I_{Sj}$ to a content image $I_c$ containing entity classes i (i: 1, 2, ...M) comprising the steps of: providing a plurality of j style images ($I_{Sj}$: $I_{S1}$, $I_{S2}$, $I_{SN}$), each containing entity classes i (i: 1, 2, ...M); for a first entity class i, (a) for each style image $I_{Sj}$ of the plurality of style images ($I_{Sj}$: $I_{S1}$, $I_{S2}$, ......$I_{SN}$), computing a parameter $\lambda_{ij}$, representing the similarity between each style image $I_{Sj}$ and the content image $I_c$; (b) selecting, from the plurality of style images $I_{Sj}$, the style image $I_{SW}$ with the parameter $\lambda_{iW}$ representing the highest said similarity; (c)stylising the content image $I_C$, by applying the selected style image $I_{SW}$ to the content image $I_C$, to generate a stylised content image $I_{CSi}$.

In an exemplary aspect of the process of this disclosure the process comprises for each further entity class i, the steps of: (i) incrementing i to i+1; (ii) repeating the steps (a) to (b), set out above, to select a style image $I_{SW}$; (ii) generating a stylised content image $I_{CS i+1}$, by applying the selected style image $I_{SW}$ to the stylised content image $I_{CSi}$ of the preceding i-value; and deriving, for the final entity class i=M, a final stylised content image $I_{CSM}$.

In an exemplary aspect of the process of this disclosure the parameter $\lambda_{ij}$ relates directly to said similarity and the selecting step comprises selecting the style image $I_{SW}$ with the largest value of $\lambda_{ij}$ for a given i-value.

In an exemplary aspect of the process of this disclosure the parameter $\lambda_{ij}$ relates inversely to said similarity and the selecting step comprises selecting the style image $I_{SW}$ with the smallest value of $\lambda_{ij}$ for a given i-value.

In an exemplary aspect of the process of this disclosure the step of computing the parameter $\lambda_{ij}$ comprises computing a similarity parameter $\lambda_{ij}$ comprising constituent parameters other than the number of pixels labelled as i on $I_C$ and $I_{Sj}$.

In an exemplary aspect of the process of this disclosure the constituent parameters comprise the number of entities labelled as i in the content image $I_C$ and in the style images $I_{Sj}$.

In an exemplary aspect of the process of this disclosure the constituent parameters comprise the size of the entities of a particular class i in the content image $I_C$ and in the style images $I_{Sj}$.

In an exemplary aspect of the process of this disclosure the values of the parameter $\lambda_{ij}$ are elements of an i-j matrix with i rows and j columns.

In an exemplary aspect of the process of this disclosure i =1 and M=1 and, for this class, there is no associated entity.

A further exemplary aspect of the present disclosure is directed to a process for applying style images ($I_{Sj}$: $I_{S1}$, $I_{S2}$, $I_{SN}$) to a content image $I_C$ containing i (i: 1, 2, ...M) entity classes, comprising the steps of: splitting, by area, the content image $I_C$ into a plurality k of content patches ($P_{Ck}$: $P_{C1}$, $P_{C2}$, ... $P_{CZ}$); splitting, by area, each of the j style images $I_{Sj}$ into a plurality k of style patches ($P_{Sjk}$: $P_{Sj1}$, $P_{Sj2}$, ... $P_{SjZ}$), wherein, for each value of k, the content patch $P_{CK}$ is paired with the corresponding j style patches $P_{Sjk}$, to form a content-style patch group ($P_{Ck}$ - $P_{Sik}$ ($P_{S1k}$, $P_{S2k}$, ... $P_{SNk}$)), and, for each of the k content-style patch groups ($P_{Ck}$ - $P_{Sjk}$ ($P_{S1k}$, $P_{S2k}$, ... $P_{SNk}$)), the following steps are performed: (a) for an entity class i, computing a parameter $\lambda_{ijk}$ representing the similarity between style patch $P_{CK}$ and each of the j style patches ($P_{Sjk}$: $P_{S1k}$, $P_{S2k}$, ... $P_{SNk}$); (b) selecting, from the plurality of j style patches $P_{Sjk}$, the style patch $P_{SWk}$ with the parameter $\lambda_{ijk}$ representing the highest said similarity; (c) a stylising the content patches ($P_{CSik}$), by applying the selected style patch ($P_{SWk}$) to the content patch ($P_{Ck}$) to generate stylised content patches ($P_{CSik}$); (d) incrementing i to i+1, and, based on each stylised content patch $P_{CSik}$ of the preceding entity class i, repeating the above steps (a) to (c) to generate a further stylised content patch $P_{CS i+1k}$; (e) repeating the incrementing at (d) until i=$M_k$, and deriving, for the final entity class i=$M_k$, final stylised content patches $P_{CS M k}$; and recombining the k final stylised content patches $P_{CSMk}$, where k varies from 1 to Z, into a single final stylised content image $I_{CS}$.

In an exemplary aspect of the process of this disclosure the step of computing the parameter $\lambda_{ijk}$ comprises computing a similarity parameter $\lambda_{ijk}$ comprising constituent parameters other than the number of pixels labelled as i on $P_{Ck}$ and $P_{Sjk}$.

In an exemplary aspect of the process of this disclosure the constituent parameters comprise the number of entities labelled as i in the content patch $P_{Ck}$

and in the style patches $P_{Sjk}$.

In an exemplary aspect of the process of this disclosure the constituent parameters comprise the size of the entities of a particular class $i$ in the content patch $P_{Ck}$ and in the style patches $P_{Sjk}$.

In an exemplary aspect of the process of this disclosure $Z = 1$ and there is a single $k$-value.

In an exemplary aspect of the process of this disclosure the number of $i$-values, M, in each patch k, is one.

In an exemplary aspect of the process of this disclosure the patches in each content-style patch group are of unequal size and contain different numbers of pixels.

In an exemplary aspect of the process of this disclosure M=1 and a single $i$-value, and for this class, there is no associated entity.

A further exemplary aspect of the present disclosure is directed to the process steps, as disclosed herein, implemented by a computer.

A further exemplary aspect of the present disclosure is directed to a computer program product comprising program code instructions stored on a computer readable medium to execute the process steps, as disclosed herein, when said program is executed on a computing system.

A further exemplary aspect of the present disclosure is directed to a computer-readable storage medium comprising instructions, which when executed by a computer, causes the computer to implement the steps as disclosed herein.

A computing system comprising input device, memory, graphic processing unit (GPU), and an output device, configured to execute the process steps as disclosed herein.

A brief explanation of "style transfer", as applied in an embodiment of the method and apparatus as disclosed herein, is provided herewith, in reference to a transformation operation performed on the attributes of a content image dataset, in order to enhance the look and feel, and especially the realism, in the latter. As indicated in an opening passage of this disclosure, "style transfer" or "stylisation" refers to the practice in which certain attributes or characteristics of a style image dataset are, by means of such a transform, in effect "transferred" or "applied" to (or assumed or adopted by) the content image dataset. Once the style transfer has taken place, the content image is said to be stylised and is a stylised content image. The terms "style transfer" and "stylisation" are used interchangeably herein, and refers to any such transformation of a content image dataset, including any transfer, assumption, adoption or application (also used interchangeably herein) of some of the attributes or characteristics of a style image dataset by a content image data.

As mentioned above, autoencoders are often used to perform a style transfer. An autoencoder, comprising an encoder and decoder for down- and up-sampling respectively, as explained previously, analyses annotations in the respective datasets and determines modifications to be performed on the pixels of the content dataset which would render these enhancements on the content image. In conventional systems, this determination is derived from a comparison of the content image with a single style image, without the selection process described above. In such systems this comparison considers the areal similarity of the content image and the single style image, ie by counting the number of pixels in each. If the similarity is sufficiently high the content image is stylised using the style image data, if not there is no stylisation, ie a binary outcome.

The style transfer itself, in both conventional systems and in accordance with an embodiment of the apparatus and method of this disclosure, consists of known techniques whereby pixels of the content image are modified by transforming ("replacing" or "transferring" or "assuming" or "adopting" or "applying", as described above) certain attributes or characteristics of those content pixels to the attributes of corresponding pixels of the style image. In this sense, reference is made herein to "applying" a style of a style image to a content image, ie a "style transfer" or "stylisation" of the content image or a region thereof. References to "attributes" herein are to the statistical properties of the pixels in the dataset concerned: these relate to any parameters associated with the pixels, such as the RGB values of the pixels or intensity values of the pixels, the statistical properties being, for example, the mean and covariance of the RGB values or other relevant parameters for the pixels concerned.

As stated above, conventional approaches to domain matching for style transfer include comparison of a content image to a single style image to determine similarity between these two. The comparison has to be performed on class-by-class basis and therefore, as stated previously, relies on proper annotation for the pixels. The term entity classes, hereinafter "classes", refers to particular genres of entities depicted in the content and style image, such as persons, cars, buildings, vegetation, street furniture, office furniture. The reader will understand that similarity matching can clearly only be useful when it is performed on the basis of a single class at a time - there is no point testing the similarity of a person's image against that of a tree or attempting matching images of cars and bus stops. Thus, domain matching considers matching of pixels of a first class, then matching of pixels of a second class, etc, until all the classes have been considered.

In known systems the determination of similarity is a straightforward process in which the annotations and attributes of pixels in corresponding regions of the two images are compared, and, where similarity is deemed to be sufficient, eg because the proportion of the pixels analysed which have the same annotations and similarity exceeds a predetermined threshold, then the style is transferred to the content image thereby generating a new stylised content image.

If there is sufficient matching, then the stylisation occurs, otherwise there is no style transfer. As stated above, the binary nature of this process is not satisfactory and to occur it depends on a random style image which may have sufficient similarity to the content image. Also, if the two images are of a such different sizes, such that the number of pixels in the two images is quite disparate, the chances that there is sufficient similarity between them is low: such approaches work best when the content image and style image are approximately the same size, which is clearly quite limiting.

The disadvantages of this approach are exacerbated when numerous entity classes are considered: when looking at the individual classes, there may be an absence or lack of pixels of a particular class, or there may be more size mismatches in one or more style images, and such difficulties accumulate as further classes are added.

In accordance with an aspect of the disclosure herein, a better approach to the conventional one described above is one in which the comparison of a content image is not to a single style image, but to a plurality of candidate style images. In this aspect the similarity with the content image is determined for each of the candidate style images, but only one of the candidate style images, the one for which the similarity is a highest, is selected to participate in the style transfer, the other candidates being unused. The style transfer is based solely on applying the style of the selected style image to the content image. As with conventional domain matching, this approach is applied on a class-by-class basis. However, the approach disclosed herein uses a plurality of candidate style images for each class, with only one of the candidates being selected for style transfer onto the content image for that particular class. For each class, both the candidates, and the resulting selection, may differ.

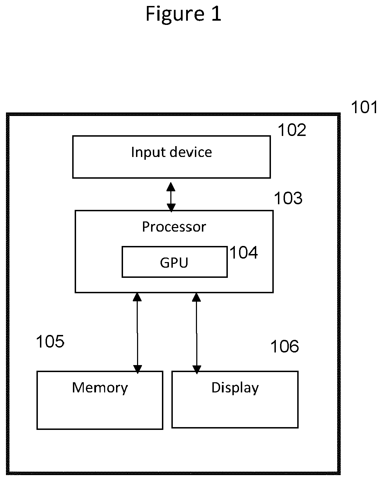

Fig.1 shows a schematic representation of an apparatus according to an aspect of the disclosure herein: a computing device (101) comprising an input means (102), a processor (103) with a graphic processing unit (104), a memory (105) and an output unit eg display (106). The reader will understand the memory must be sufficiently large to store large image datasets, communicate these to the processor which is itself configured to modify such datasets. The processor (103) and graphic processing unit (104) are configured to obtain datasets and perform the processes as set out herein.

In an aspect of the invention disclosed herewith, the selection process described above is based on computation of a similarity parameter $\lambda_{ij}$ for each style image $I_{Sj}$ of the plurality of N style images ($I_{Sj}$: $I_{S1}$, $I_{S2}$, $I_{SN}$) for a class (i: 1,2,3, ......M). For any class $i$, the similarity parameter $\lambda_{ij}$ between the content image $I_C$ and each of the N style images is computed. Each value of $\lambda_{ij}$ computed will represent the degree of similarity between the $j$-th style image $I_{Sj}$ and the content image $I_C$. Among the different style images, one of them, ie one value of $j$, (call that $j$-value "W", the winning $j$-value) will be *more* similar to the content image than all the $I_{Sj}$. The style image $I_{SW}$ having the highest similarity parameter $\lambda_{iw}$, corresponding to the highest similarity, (for which $j$= W) is selected.

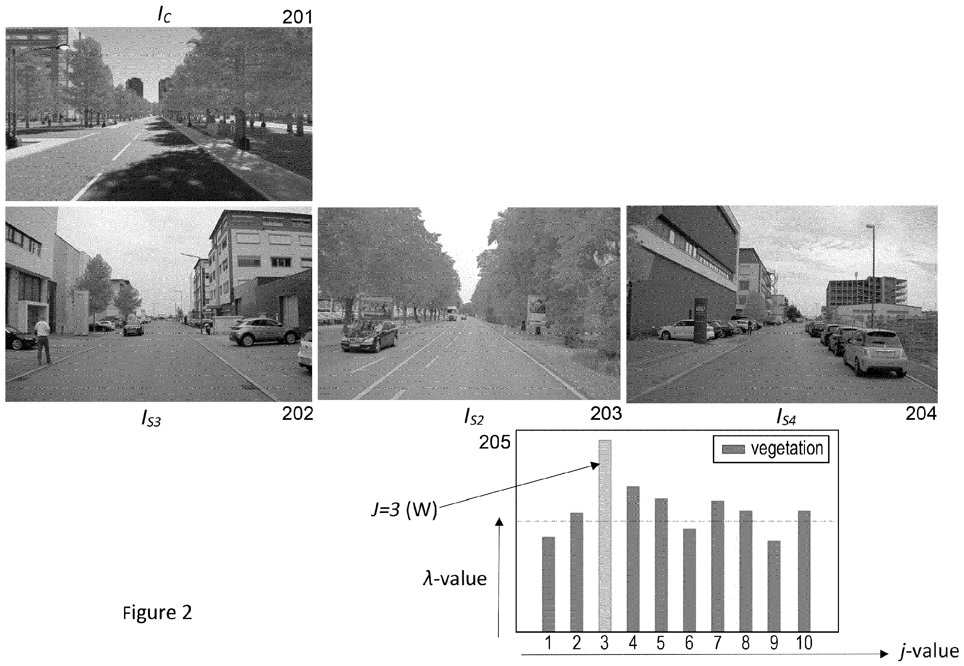

It is the style (its attributes) of this style image $I_{Sj}$ having the greatest similarity to the content image $I_C$ which is "applied", ie transferred, to the content image $I_C$. The same methodology is applied to the next class $i$+1, resulting in a new selection of $I_{Sj}$ (that style image with the highest similarity parameter for class $i$+1) and so on. An illustration of how the methodology disclosed herein works is provided in Fig. 2. To maintain simplicity, Fig 2 shows only that part of the overall methodology for a single class $i$, (in this case, let us assume, for example, that $i$=2 and that this corresponds to the class "vegetation"), but the reader will understand from the foregoing, that the same steps illustrated in Fig. 2 would be applied in respect of each relevant class (such as "vehicles", "persons" etc).

It will be apparent to the reader that the different values of $\lambda_{ij}$ can be, if convenient, collated as different elements in a $i$ x $j$ matrix, composed of i rows and j columns (or vice versa), allowing for ready selection of the appropriate $j$-value element (corresponding to "W") within in each of row (or column).

Fig. 2 shows a content image $I_C$ at 201, before being subject to stylisation (a style transfer): this content image is generated from a synthetic dataset representing a virtual setting and having virtual objects within. References 202-204 represent a number of exemplary style images $I_S$, each of which is potentially a candidate style image for style transfer to the content image $I_C$: to avoid overloading the illustration, Fig.2 only illustrates three exemplary style images $I_{S2}$, $I_{S3}$ and $I_{S4}$, corresponding to the $j$=2, $j$=3 and $j$=4, although, as indicated above, the number of candidate style images may be any number N.

For each different candidate style image $I_S$ the similarity with the content image $I_C$ is different and for each candidate a similarity parameter $\lambda_2$ may be computed. In Fig. 2 the results of computation of $\lambda_{2j}$ for each of the different $j$-values, which in this example are $j$: 1,2,3...10, have been computed for each of the candidate style images $I_{S1}$, $I_{S2}$, $I_{S3}$ ... $I_{S10}$ and set out in a histogram at 205. The reader will see from the histogram at 205 that $\lambda_{2j}$ is largest at $j$=3 and that, of the different style images $I_S$, the greatest similarity with content image $I_C$ occurs at $j$=3. Thus, of the candidate style images $I_{S1}$, $I_{S2}$, $I_{S3}$ ... $I_{S10}$, the style image for which $j$=3, ie style image $I_{S3}$, is the "winning" candidate (call this $j$-value "W"), because, of all the candidates, it is the style image $I_{S3}$ for which similarity with the content image $I_C$ is the highest, ie W=3 in this example. In other words, because, as stated above, Fig 2 is concerned with the class "vegetation", the histogram shows that, in respect of the class vegetation, style image $I_{S3}$ (for which $j$=3) has the greatest similarity to the content image $I_C$. Therefore this style image $I_{S3}$ (and only this one) is selected as basis for the style transfer (in respect of the class "vegetation") to content image $I_C$, resulting in the stylised content image $I_{CS}$.

By identifying the most appropriate style image among a group of candidate style images and selecting this style image for style transfer for a particular class, the resulting style transfer is likely to be more successful than in conventional methods which make no such selection and lack such optimisation. The resulting stylised content image $I_{CS}$ is likely to display a greater realism than one output from a conventional approach without any selection step.

The reader will understand that measurement or determination of similarity between two images is also a measurement or determination of *dis*similarity between the two images, in the sense that by determining how similar they are one also determines how dissimilar they may be. The selection described above identifies that style image at $j$=W (of the N style images for class $i$) which has the greatest similarity to the content image in question. Thus, in accordance with the apparatus and process disclosed herein, any similarity parameter $\lambda_{ij}$ by which the similarity between candidate style image $I_{Sj}$ and content image $I_C$ may be represented, is envisaged, including parameters *inversely* related to such similarity (as demonstrated below).

The selection process described above is required for each class $i$ (not just class "vegetation") to ensure that in each class the same optimisation of style transfer is achieved. For each $i$-value a style image has to be selected (ie the W value of $j$), and the resulting style transfer has to occur. In accordance with an aspect of the invention, the style transfers determined at each $i$-value, are accumulated. Thus, if selection of a style image for transfer is made for a particular class $i$ and the style transfer to the content image has occurred (using the selected style image), then the resulting stylised content image $I_{CSi}$ is used in the style image selection and style transfer for the *next* class $i$+1, ie to generate $I_{CSi+1}$, and so on, until style image selection and each resulting style transfer has occurred over all relevant classes $i$=1 to M. The reader will understand, the final stylised image is the stylised image with style transfers for each $i$-value (each being based on a selection process for that $i$-value) *aggregated* over all the $i$-values from 1 to M.

As the reader will understand, the number of classes M may have any value, including M=1, ie there is just one class. A special case of this is the scenario where the pixels have no labels/annotations, with no associated entity: the pixels then form a single "unlabelled" class $i$.

As stated earlier, the determination of the pixel modification occurring under the style transfer, depends inter alia on the similarity between corresponding pixels (regional content-image pairs), such that a greater number of pixels are appropriately modified if the similarity within the pairs is greater. Mismatches because of dissimilarity with the content-image pairs, eg because of size mismatches, cause inappropriate modifications and errors, or artefacts, to arise in the content image, which tend to reduce, rather than enhance, realism in the content image once stylised (by style transfer).

In accordance with an aspect of the apparatus and method disclosed herein, by basing the determination on a style image dataset, specifically selected from a plurality of style image datasets, for its similarity to the content dataset, such artefacts, can be reduced, ie selecting an image dataset to optimise the similarity facilitates a more suitable style transfer.

In accordance with an embodiment of the apparatus and method disclosed herein, different forms of similarity parameter $\lambda_{ij}$ are envisaged, which rely on different measurements of similarity, such as similarity in the areas of corresponding regions of the content and style images, or the similarity in statistical properties (eg mean and covariance) in the corresponding regions of the two images. In an embodiment of the apparatus and method of the invention disclosed herein, the areal similarity may be determined by computation of the parameter $\lambda_{ij}$

$$\lambda_{ij} = \frac{1}{\left| \log\left(\frac{c_i}{s_{ij}}\right) \right|}$$

wherein, in the above equation, $C_i$ and $S_{ij}$ are the number of pixels labelled as $i$ on $I_C$ and $I_{Sj}$ correspondingly.

The above matrix $\lambda_{ij}$ has been used in the example set out in Fig. 2 to calculate areal similarity between each of the different style images $I_{Sj}$ ($I_{S1}$, $I_{S2}$, $I_{S3}$ ... $I_{S10}$) and the content image $I_C$. For each of the different $j$-values (in the Fig 2 example these are $j$: 1,2,3...10 and $i$=2 "vegetation"), corresponding to the candidate style images $I_{S1}$, $I_{S2}$, $I_{S3}$ ... $I_{S10}$, the matrix $\lambda_{2j}$ is computed and set out in a histogram at 205 in Fig.2, as previously discussed, resulting in $\lambda_{2j}$ having a maximum value at $j$=3, leading to the selection of $I_{S3}$ for the style transfer.

Similarity between a content image and a style image may also be based on features other than areal similarity or numbers of pixels. In accordance with aspects of the apparatus and method of the invention disclosed herein non-areal measurements of similarity may also be used. For example, similarity, and indeed the parameter $\lambda_{ij}$, may be based on the number of entities contained in the content/style images for a given class $i$ of entity: ie comparing numbers of persons in each image, or numbers of vehicles in each image, etc, such that if the number is comparable eg 24 persons in the content image with 23 persons in the style image, then the similarity is high, compared to 24 persons and 3 persons, which might be considered low similarity. The parameter $\lambda_{ij}$ could be computed accordingly. Another example of a non-areal similarity determination (and parameter $\lambda_{ij}$ determination) is based on the similarity between colour distributions in the content image and style image (e.g. the lighting of the image: images in daylight are more similar to each other compared to those taken in the night-time).

As stated above, in accordance with an embodiment of the apparatus and process of the invention, any similarity parameter $\lambda_{ij}$ may be envisaged, as long as it reflects the similarity between candidate style image $I_{Sj}$ and content image $I_C$, including parameters which are *inversely* related to such similarity. An example of a similarity parameter in which the relationship with said similarity is inverse (ie similarity is greatest when the value is lowest) is given by:

$$\lambda_{ij} = \left| \log\left(\frac{C_i}{S_{ij}}\right) \right|$$

Had a similarity parameter $\lambda_{ij}$ of the above form (ie inverse relation) been used then the histogram 205 in Fig. 2 would have been interpreted and used differently. In this context, the reader will understand, one would have selected the *lowest* value (not the highest).

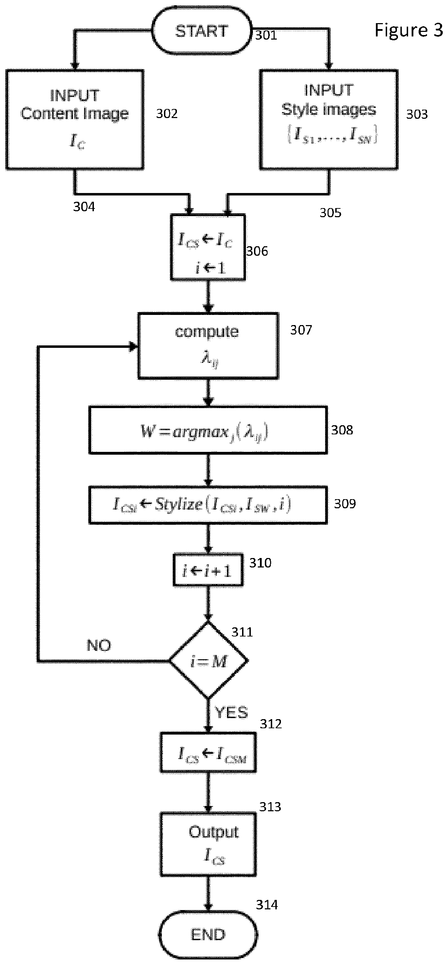

Reference is now made to Fig 3 which shows, as a flow chart, the steps already described in optimising a style transfer to a content image, by selecting a style image for which similarity with the content image is a maximum. The reader will understand that these steps (Fig.3) and those described in relation to Fig. 2 may be performed by the processor (103) and its GPU (104), with content/style images being called up from the memory (105) or input using means (102), and output images may be rendered using output means (106), as set out in Fig.1

Starting from step 301, the single content image $I_C$ is obtained and input at step 302 along with a *plurality* of N style images $(I_{Sj}: I_{S1}, I_{S2}, I_{SN})$ which are also input (at step 303). Via control flows 304, 305 these inputs are used in an initialisation step 306. Figure 3 indicates that these steps occur for a class $i$ this being the first of M classes in the group 1,2,3 ...M, the process at 306 initially setting the initialised *stylised* content image $I_{CS}$ to be the input content image $I_C$ and the $i$-value initially set at 1 (one). At step 307, the similarity of the content image $I_C$ with each of the N style images $(I_{Sj}: I_{S1}, I_{S2}, ......I_{SN})$, is computed, for that $i$-value, and the corresponding parameters $\lambda_{ij}$ computed for each $j$-value, using the formula stated previously, or another parameter formula. At Step 308 the W is identified as that $j$-value (of the N $j$-values in that i-class) having the maximum value of $\lambda_{ij}$ ie $\lambda_{iw}$. Step 308 is the selection step for class $i$: the $j$-value with the largest of the N computed $\lambda_{ij}$-values is identified (as W). At Step 309 the corresponding style image $I_{sw}$ is applied (style transfer) onto the content image $I_C$, thereby generating a *stylised* content image $I_{CS}$ for class $i$, ie in which only those regions labelled "$i$" are stylised. Step 310 increments $i$ to $i+1$, and step 311 determines whether this incrementation raises the $i$-value to M (and all $i$-values have been exhausted) or if $i+1$ is still below M: if the incremented value $i+1$ is below M, the "No" arrow brings the control back to step 307, in which the $\lambda_{i+1j}$ is computed across all j-values to identify for $i+1$ the most similar style image $I_{SW}$ which is then used to stylise the previously stylised $I_{CS}$; if, on the other hand, as at 312, the $i$-value has reached M, no further iteration occurs and the *final* stylised content image $I_{CSM}$ is output at Step 313.

The reader will understand that the effect of each iteration represented by the "no" loop is to overlay any previous stylised content image $I_{CS}$ (derived using a previous $i$-value) with a *further* stylisation arising from the new computation/selection steps 308, 309. The style transfers arising from a selection of a content image $I_{SW}$ for each class $i$ are cumulative, in the sense that each style transfer operates on the stylised content image $I_{CS}$ of the previous $i$-value's iteration. Thus, if the iteration occurs, for example, four times, then the stylised content image $I_{CS}$, resulting from the first stylisation, is overlaid a further three times. This overlaying over a stylisation on the previous stylised content image $I_{CS}$ occurs at each iteration until all $i$-values are exhausted ie until $i$ reaches $i$=M.

The final stylised content image $I_{CS}$ is the outcome of a M iterations, each iteration being based on a different class $i$. At each of these iterations, the stylised content image $I_{CS}$ output depends on selection of one style image $I_S$ from N style images, the selection of the style image depending on the corresponding $\lambda_{ij}$-value computed for each of the N style images, the $\lambda_{ij}$-value reflective of that style image's similarity to the content image $I_C$. As stated previously, by selecting, for each class $i$, from the N style images $I_S$ just the style image $I_{SW}$ with the greatest similarity to the content image, the number of regional pixel pair mismatches will be greatly reduced when compared to conventional domain matching, without such a style selection, and the quality of the style transfer will be correspondingly enhanced. There is nevertheless a difficulty arising from the repeated overlaying described above and the cumulative nature of stylisation operating on the outcome of previous stylisations, which requires the whole of the content dataset to pass through the autoencoders M times, once for each of the M classes ($i$ = 1 to M). As explained previously, an autoencoder takes a content image, down-samples it to its feature vector, performs a transformation on the feature vector and then up-samples the feature vector to reproduce a modified content image. The process conducted in the autoencoders is imperfect and at each passage through the autoencoder some artefacts are produced. In a single passage, these artefacts may be invisible to the eyes however problem arises when an image is fed to the network multiple times, as described above. In this case artefacts accumulate and may indeed become fully visible in the final stylised content image $I_{CS}$ which is the result of M iterations.

In an embodiment of the method and apparatus disclosed herein the effects of such accumulated artefacts is mitigated by adopting a patchwork approach to the content image and style image.

In essence, the patchwork approach entails splitting the content image and style image into a plurality of patches (which are not necessarily of equal size or equal pixel number), thereby forming a group comprising a content patch and the corresponding image patches, then applying the same similarity determination and image dataset selection process as previously described in earlier passages to each of the patch pair, with stylisation (as described in earlier passages) occurring at the level of each patch pair (rather than at level of entire content/style images) and then finally recombining the stylised content image patches. The reader will understand that the style transfer approach described previously in relation to whole content images and style images is applied, instead, to localised patch pairs: both approaches comprise selecting a style image from a plurality of candidate style images, using associated similarity parameter for each candidate, and using the "winning" candidate as the basis for the style transfer.

An advantage of the patchwork approach is that each patch and its stylisation process is independent of all other patches. The style transfer in each patch is based on a determination, for that patch, of the similarity of the corresponding content patch and each of a plurality of style datasets for the corresponding style patch, as well as the resulting selection of one such style patch (from the plurality). Any errors arising from any one patch's style transfer is not passed to other patches, whose style transfer is determined entirely independently from the first patch.

In the non-patchwork approach, as discussed previously, the datasets are constantly down- and up-sampled by autoencoders and in the repeated iterations of the complete datasets carry, and accumulate, artefacts as they arise in each the iterations, irrespective of where in the image they occur. In the patchwork approach, by contrast, although artefacts are still possible in each patch, the overall image is fragmented into independent portions, so the artefacts do not accumulate over the different patches and each patch is effectively "immune" to artefacts in other patches.

A further advantage of the patchwork approach is that the style transfers occurring in each patch may be tailored specifically to that patch ie because the similarity between different content-style pairs may differ for each patch, the relevant similarity computations and the style selection may both also differ for each patch. By stylising a patch of a content image, rather than stylising an entire content image, the stylisation of each patch attains a greater degree of realism than would otherwise be possible using the relatively indiscriminate "blanket approach" of entire image stylisation.

In an aspect of the method and apparatus of the invention, a content image $I_C$ containing $i$ ($i$: 1, 2, ...M) entity classes is split, by area, into a plurality $k$ of content patches ($P_{Ck}$: $P_{C1}$, $P_{C2}$, ... $P_{CZ}$), each containing $M_k$ entity classes. A plurality of style images ($I_{Sj}$: $I_{S1}$, $I_{S2}$, ......$I_{SN}$) are each split, by area, into a plurality $k$ of style patches ($P_{Sjk}$: $P_{Sj1}$, $P_{Sj2}$, ... $P_{SjZ}$). The $k$-value varies from 1 to a maximum value Z, where Z patches represents the whole content image and whole style image respectively. Thus, for each value of $k$ there is, at each class $i$, a group comprising a content patch $P_{Ck}$ and a plurality of $N$ style patches $P_{Sjk}$. The approach envisages, at the level of each patch group, a computation of a parameter (representing similarity between each $j$ style patches and the content patch) and, based on the parameter denoting highest similarity, a selection of the corresponding style patch - the same as in the previous approach, but now on a patch level - as set out below.

For each content patch ($P_{Ck}$: $P_{C1}$, $P_{C2}$, ... $P_{CZ}$), the following steps are undertaken:

(a) for an entity class $i$, a parameter $\lambda_{ijk}$ representing the similarity between the content patch concerned $P_{Ck}$ and each style patch $P_{Sjk}$ of the plurality of style patches ($P_{Sjk}$: $P_{S1k}$, $P_{S2k}$, ...$P_{SNk}$), is computed;

(b) the style patch $P_{SWk}$ with the highest similarity parameter $\lambda_{ijk}$ is selected from the plurality of style patches ($P_{Sjk}$: $P_{S1k}$, $P_{S2k}$, ......$P_{SNk}$) and;

(c) a stylised content patch $P_{CSik}$ is generated by applying the selected style patch $P_{SWk}$ to the content patch $P_{Ck}$

(d) $i$ is incremented to $i+1$, and then, using the stylised content patch $P_{CSik}$ generated for the preceding class $i$, steps (a) to (c) are repeated, thereby generating a further stylised content patch $P_{CSi+1k}$, and this continues until the incrementations raise the $i$-value to $i=M_k$, thereby generating a final stylised content patch $P_{CSMK}$

After incrementing over all $k$-values and generating the final stylised content patches $P_{CSMk}$, these final stylised patches are recombined (across all $k$-values, 1 to Z) into a combined stylised content image $I_{CS}$

The reader will understand from the foregoing that the style matrix computation (deriving parameter $\lambda_{ijk}$) and the selection (for the style transfer), as described in earlier passages, occur in this embodiment on a patch-by-patch basis, with each content patch $P_{Ck}$ being individually stylised (into stylised content patch $P_{CSMk}$ over $M_k$ $i$-classes, before all $k$ final stylised content patches are recombined into a single stylised content image $I_{CS}$. In other words, steps (a)-(d) of the patchwork approach are in principle the same as the initial approach, as set in earlier passages of this disclosure, except that these steps are applied to one patch (of the content/style image) at a time, before recombining all the patches.

As in the earlier approach (non-patchwork), the similarity parameter in the patchwork approach may take the corresponding form

$$\lambda_{ijk} = \frac{1}{\left|\log\left(\frac{c_{ik}}{s_{ijk}}\right)\right|}$$

where $C_{ik}$ and $S_{ijk}$ are the number of pixels labelled as $i$ on $P_{Ck}$ and $P_{Sjk}$ correspondingly in the k-th patch, the highest value of $\lambda_{iWk}$ denoting maximum similarity, the corresponding style patch $P_{SWk}$ being the selected style patch for the style transfer. As before, an inverse relation version may also be used (the lowest value denoting maximum similarity), such as

$$\lambda_{ijk} = \left|\log\left(\frac{C_{ik}}{S_{ijk}}\right)\right|$$

It will also be apparent that in this patchwork approach, the number $k$ of patches may, in accordance with an aspect of the invention, be reduced to 1: if the upper limit Z is set to 1 there is only $k$-value ($k = 1$) and only one patch, and that one patch would coincide with the entire content/style image. In this case, the patchwork approach would then apply to the single patch and, in effect, would be the same as the originally described approach.

As stated above, the k different patches are not necessarily of the same size and may contain quite different numbers of pixels: the patches in one patch group (with a particular $k$-value) may be considerably larger or smaller than the patches another patch group (with a different $k$-value). The patchwork approach allows considerably flexibility in ensuring an optimal distribution or split of patches across the relevant images, to achieve the greatest realism, and will accommodate, for example, both highly diverse images or "busy" images, as well as relatively homogenous images. In an exemplary aspect of the apparatus and process of the invention, the different patch groups may be set up to comprise a single entity class, ie they each relate to only one $i$-value, although not necessarily the same entity class. One patch group may, for example, contain images in which all the pixels are in the class $i=2$, while another patch group comprises images for which only pixels with class $i=3$ are present. This may save on processing time and reduce artefacts further.

As referenced already in respect of the non-patchwork variant, the number of classes M may, also in the patchwork variant, have any value, including M=1, ie just one single class. Again, as special case of this is the scenario where the pixels in at least one patch have no labels/annotations, with no associated entity: the pixels then form a single "unlabelled" class $i$.

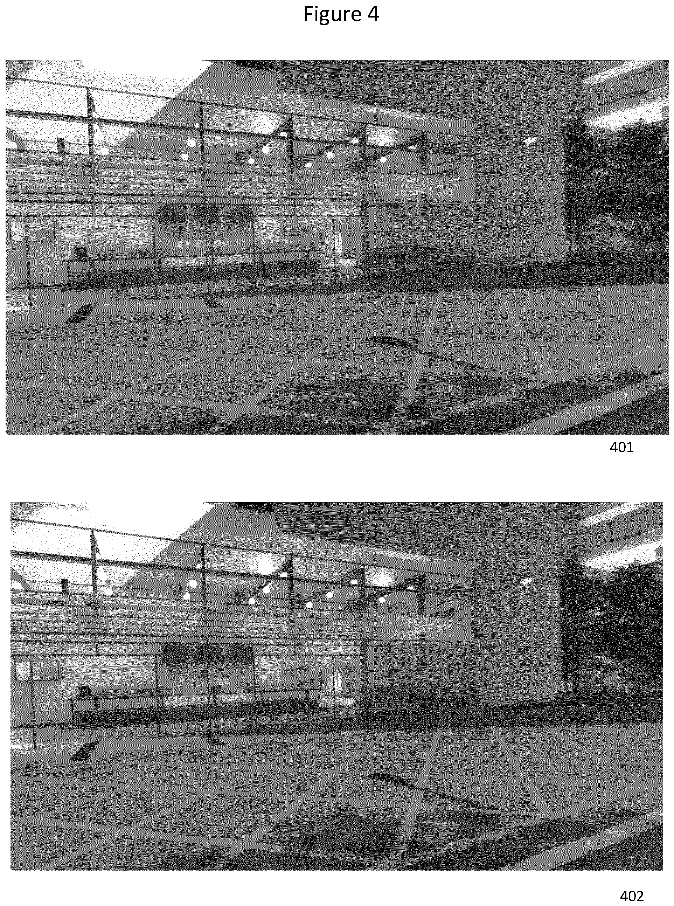

Fig. 4 demonstrates the effect of using the patchwork approach to style transfer. The image 401 shows a stylised content image (ie after style transfer has been applied) without use of patches. The image 402 shows the same content image generated using the patches approach. It will be immediately apparent to the reader that that image (401) contains a number of rainbow artefacts, whereas image (402) shows a sharp correctly rendering and provides a much better photorealistic experience for the viewer. In a colour version of the monochrome image at (401) the rainbow artefacts are clearly visible. As explained previously, the patchwork approach reduces the number of artefacts arising from the accumulated errors occurring when a whole image is repeatedly iterated between autoencoder down- and up-sampling, each patch being "immune" to the artefacts generated in other patches.

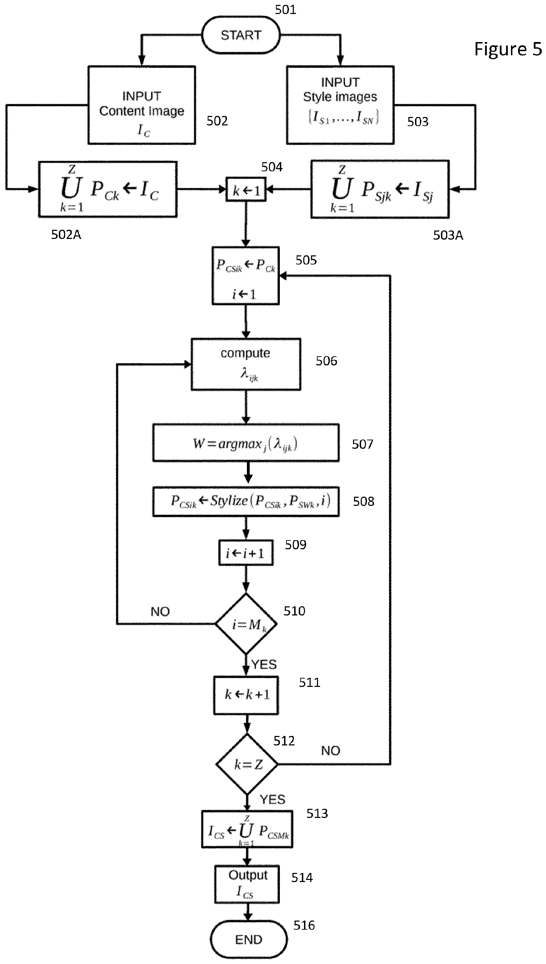

Reference is now made to Fig 5. This shows as a flow chart the steps involved in a patchwork approach in accordance with an embodiment of the apparatus and method of the invention.

Starting from step 501, the single content image $I_C$ is obtained and input at step 502 along with a *plurality* of N style images ($I_{Sj}$: $I_{S1}$, $I_{S2}$, $I_{SN}$) which are input at step 503. The content image $I_C$ is split at step 502A into k content patches $P_{Ck}$ and the j style images $I_{Sj}$ are *each* split at step 503A into k style patches $P_{sjk}$ (corresponding to the content patches $P_{Cik}$). After initialising the $k$-value to 1 (one) at Step 504, the subsequent steps 505-510 are repeated for each subsequent $k$-value up to k=Z. As each k-value is a different patch (from the total Z patches) the reader will understand that the steps 505-510 occur for each patch group containing a content patch $P_{CK}$ and j style patches $P_{Sjk}$. The first of these steps, at Step 505, is another initialisation step, this time of the $i$-value, which is initially set to 1 (one), and of the stylised content patch $P_{CSik}$ which is initially set to $P_{Ck}$ (the original k-th content patch after the splitting of the content image $I_C$). Using this $i$-value (ie for a given class), the $j$ values of a similarity parameter $\lambda_{ijk}$, representing the similarity between the content patch $P_{Ck}$ and each of the $j$ style patches $P_{Sjk}$, is computed at step 506. Still in the same $k$-value, that style patch $P_{SWk}$ (where $j$=W) having the greatest similarity (ie usually this is the *highest* value of the parameter $\lambda_{ijk}$, but it depends on which form of (dis)similarity is used, as described herein) to the content patch $P_{Ck}$ is selected at step 507 to stylise the content patch and thereby generate at 508 the stylised content patch $P_{CSik}$ for that particular $i$-value in that particular patch. At step 509 the $i$-value is incremented to $i$+1 and, starting with stylised content patch $P_{CSik}$ (generated for the previous (unincremented) $i$-value) the process defined at steps 506-509 is repeated for $i$+1, such that a further style transfer is identified by means of the $\lambda_{i+1jk}$ computation and the corresponding selection of a j-value (W), thereby generating a further stylised content patch $P_{CSi+1k}$ for that particular patch. These iterations continue until all the classes have been exhausted (step 510) and the $i$-value reaches $M_k$ and the final stylisation generates the final stylised content patch $P_{CSMk}$ for that patch group $k$, this being the result of the accumulated stylisations from $i$=1 to $i$=$M_k$. Once the final stylised content patch $P_{CSMK}$, ie when value of $i$ reaches $i$=$M_k$, then k is incremented (Step 511), ie the next patch is considered. For each successive patch group (with a specific *k*-value), the same process occurs, generating independent final stylised content patches $P_{CSMk}$ in each of the k patches, each stylisation being optimised for each patch. At step 513 all the patches (ie all *k*-values), complete with their individual stylised content patches $P_{CSMK}$, are combined, the Z patches thereby forming a new *composite* content image $I_{CS}$, which is effectively a patchwork of the individual stylised contents $P_{CSMK}$, which is output at step 514.

It will be readily understood from the above explanation of Figure 5, that the computation-selection process occurring in each patch group is independent from the same process in other groups: in each patch group the "winning" *j*-value, ie *j*=W, may be different, even in the same i-value (which itself may represent a different class in a different patch), and $M_k$ may be different for different patches. Clearly, the optimisation in one patch may be different from the optimisation in a neighbouring patch.

The reader will also understand from the above discussion that one patch $P_{CSik}$ is passed through the network $M_k$ times. As each patch is a subset of the original image (before splitting), the number of entity classes present on each patch, namely $M_k$ entity classes, is smaller than or equal to the number of the whole entity classes on the original image. In the best case scenario, where each patch is a region with a single label, $M_k = 1$ for every k and thus each patch needs to be fed into the network only once and no artefact will be accumulated. Only in the worst case scenario, in which the patch is passed to the network $M_k$=M times (when there are $M_k$ entity classes) the artefact accumulation will remain high, but this will not be the case for the majority of patches. The scenario is actually completely in the hand of the user - the user can always arrange the best scenario. The reader will understand that, under the patchwork approach, most patches will benefit from a reduced accumulation of artefacts, leading to a significant better stylised content image $I_{CS}$.

Although this disclosure makes reference to several examples of the aspects and embodiments, it will be readily understood that embodiments of the invention are not restricted to those which are explicitly referenced herein: all aspects and embodiments may be modified to comprise any number of amendments, alterations, variations or substitutions, including those which may not be explicitly referenced herein. Accordingly, the embodiments of the invention are not to be understood as limited by the above written description and are to be limited only by the scope of the appended claims. Where some features of various examples or embodiments appear in some examples, embodiments or drawings and not in others, this is only for brevity and intelligibility: components, features and structures of the aspects and embodiments disclosed herein may be combined as appropriate. Even if such combinations are not illustrated or explicitly referenced herein in relation to a particular aspect of an embodiment this is merely for brevity of the description and should not be understood to mean that such combinations are excluded or cannot occur: the different features and of the various aspects and embodiments may be mixed and combined as appropriate and this disclosure should be construed as covering all combinations and permutations of features referenced herein.

**Claims**

1. A process for applying style images $I_{Sj}$ to a content image $I_C$ containing entity classes *i* (i: 1, 2, ...M) comprising the steps of:

   - providing a plurality of *j* style images ($I_{Sj}$: $I_{S1}$, $I_{S2}$, ......$I_{SN}$), each containing entity classes *i* (i: 1, 2, ...M);
   - for a first entity class *i*,

     a) for each style image $I_{Sj}$ of the plurality of style images ($I_{Sj}$: $I_{S1}$, $I_{S2}$, ......$I_{SN}$), computing a parameter $\lambda_{ij}$, representing the similarity between each style image $I_{Sj}$ and the content image $I_C$;
     b) selecting, from the plurality of style images $I_{Sj}$, the style image $I_{SW}$ with the parameter $\lambda_{iW}$ representing the highest said similarity;
     c) stylising the content image $I_C$, by applying the selected style image $I_{SW}$ to the content image $I_C$, to generate a stylised content image $I_{CSi}$;

2. A process as in Claim 1, wherein the step of computing the parameter $\lambda_{ij}$ comprises computing

$$\lambda_{ij} = \frac{1}{\left|\log\left(\frac{C_i}{S_{ij}}\right)\right|}$$

wherein, in the above equation, $C_i$ and $S_{ij}$ are the number of pixels labelled as *i* on $I_C$ and $I_{Sj}$ correspondingly, and the selecting step comprises selecting the style image $I_{SW}$ with the highest value of $\lambda_{iW}$ for each *i*-value.

3. A process as in Claim 1, wherein the parameter $\lambda_{ij}$ relates inversely to said similarity and the selecting step comprises selecting the style image $I_{SW}$ with the smallest value of $\lambda_{ij}$ for a given *i*-value.

4. A process as in Claim 3, wherein the step of computing the parameter $\lambda_{ij}$ comprises computing

$$\lambda_{ij} = \left| \log \left( \frac{C_i}{S_{ij}} \right) \right|$$

wherein, in the above equation, $C_i$ and $S_{ij}$ are the number of pixels labelled as $i$ on $I_C$ and $I_{Sj}$ correspondingly, and the selecting step comprises selecting the style image $I_{SW}$ with the lowest value of $\lambda_{iW}$ for each $i$-value.

5. A process as in any one of Claims 1 or 3, wherein the step of computing the parameter $\lambda_{ij}$ comprises computing a similarity parameter $\lambda_{ij}$ comprising constituent parameters other than the number of pixels labelled as $i$ on $I_C$ and $I_{Sj}$.

6. A process as in Claim 5 wherein the constituent parameters comprise the number of entities labelled as $i$ in the content image $I_C$ and in the style images $I_{Sj}$.

7. A process as in Claim 5 wherein the constituent parameters comprise the size of the entities of a particular class $i$ in the content image $I_C$ and in the style images $I_{Sj}$.

8. A process as in any preceding claims, wherein the values of the parameter $\lambda_{ij}$ are elements of an $i$-$j$ matrix with $i$ rows and $j$ columns.

9. A process as in any preceding claim, the process further comprising:

   - for each further entity class $i$, the steps of:

      d) incrementing $i$ to $i+1$
      e) repeating the steps (a) to (b) to select a style image $I_{SW}$
      f) generating a stylised content image $I_{CS\,i+1}$, by applying the selected style image $I_{SW}$ to the stylised content image $I_{CSi}$ of the preceding $i$-value.

   - and deriving, for the final entity class $i=M$, a final stylised content image $I_{CSM}$.

10. A process as in any preceding claim, wherein $i = 1$ and $M=1$ and for this class, there is no associated entity.

11. A process for applying style images ($I_{Sj}$: $I_{S1}$, $I_{S2}$, ......$I_{SN}$) to a content image $I_C$ containing $i$($i$: 1, 2, ...M) entity classes, comprising the steps of:

   - splitting, by area, the content image $I_C$ into a plurality k of content patches ($P_{Ck}$: $P_{C1}$, $P_{C2}$, ... $P_{CZ}$),
   - splitting, by area, each of the $j$ style images $I_{Sj}$

into a plurality $k$ of style patches ($P_{Sjk}$: $P_{Sj1}$, $P_{sj2}$, ... $P_{sjz}$), wherein, for each value of k, the content patch $P_{Ck}$ is paired with the corresponding $j$ style patches $P_{Sjk}$, to form a content-style patch group ($P_{Ck}$ - $P_{Sik}$ ($P_{S1k}$, $P_{S2k}$, ... $P_{SNk}$)),
   - wherein, for each of the k content-style patch groups ($P_{Ck}$ - $P_{Sjk}$ ($P_{S1k}$, $P_{S2k}$, ... $P_{SNk}$)), the following steps are performed

      a) for an entity class $i$, computing a parameter $\lambda_{ijk}$ representing the similarity between style patch $P_{Ck}$ and each of the $j$ style patches ($P_{Sjk}$: $P_{S1k}$, $P_{S2k}$, ... $P_{SNk}$);
      b) selecting, from the plurality of $j$ style patches $P_{Sjk}$, the style patch $P_{SWk}$ with the parameter $\lambda_{ijk}$ representing the highest said similarity;
      c) a stylising the content patches ($P_{CSik}$), by applying the selected style patch ($P_{SWk}$) to the content patch ($P_{Ck}$) to generate stylised content patches ($P_{CSik}$)
      d) incrementing $i$ to $i+1$, and, based on each stylised content patch $P_{CSik}$ of the preceding entity class $i$, repeating the above steps (a) to (c) to generate a further stylised content patch $P_{CS\,i+1k}$, and
      e) repeating the incrementing at (d) until $i=M_k$, and deriving, for the final entity class $i=M_k$, final stylised content patches $P_{CSMK}$;

   - recombining the $k$ final stylised content patches $P_{CSMk}$, where k varies from 1 to Z, into a single final stylised content image $I_{CS}$

12. A process as in Claim 11, wherein the step of computing the parameter $\lambda_{ijk}$ comprises computing

$$\lambda_{ijk} = \frac{1}{\left| \log \left( \frac{C_{ik}}{S_{ijk}} \right) \right|}$$

wherein, in the above equation, $C_{ik}$ and $S_{ijk}$ are the number of pixels labelled as $i$ on $P_{Ck}$ and $P_{Sjk}$ correspondingly, and the selecting step comprises selecting the style patch $P_{SWk}$ with the highest value of $\lambda_{iwk}$ or each $i$-value .

13. A process as in Claim 11, wherein the parameter $\lambda_{ijk}$ relates inversely to said similarity and the selecting step comprises selecting the style patch $P_{SWk}$ with the lowest value $\lambda_{ijk}$ for a given $i$-value.

14. A process as in Claim 13 wherein the step of computing the parameter $\lambda_{ijk}$ comprises computing

$$\lambda_{ijk} = \left| \log\left( \frac{C_{ik}}{S_{ijk}} \right) \right|$$

wherein, in the above equation, $C_{ik}$ and $S_{ijk}$ are the number of pixels labelled as $i$ on $P_{Ck}$ and $P_{Sjk}$ correspondingly, and the selecting step comprises selecting the style patch $P_{SWk}$ with the lowest value of $\lambda_{iWk}$ for each $i$-value.

15. A process as in any one of Claims 11 or 13, wherein the step of computing the parameter $\lambda_{ijk}$ comprises computing a similarity parameter $\lambda_{ijk}$ comprising constituent parameters other than the number of pixels labelled as $i$ on $P_{Ck}$ and $P_{Sjk}$.

16. A process as in Claim 15 wherein the constituent parameters comprise the number of entities labelled as $i$ in the content patch $P_{CK}$ and in the style patches $P_{Sjk}$

17. A process as in Claim 16 wherein the constituent parameters comprise the size of the entities of a particular class $i$ in the content patch $P_{Ck}$ and in the style patches $P_{Sjk}$

18. A process as in any of Claims 11 to 17 wherein $Z = 1$ and there is a single $k$-value.

19. A process as in any of Claims 11 to 18 wherein the number of $i$-values, M, in each patch k, is one.

20. A process as in any of Claims 11 to 19 wherein the patches in each content-style patch group are of unequal size and contain different numbers of pixels.

21. A process as in any of Claims 11 to 20, wherein M=1 and a single $i$-value, and for this class, there is no associated entity.

22. A computer program product comprising program code instructions stored on a computer readable medium to execute the process steps according to any one of the Claims 1 to 21 when said program is executed on a computing system.

23. A process implemented by a computer comprising the steps of any of Claims 1 to 21.

24. A computer-readable storage medium comprising instructions, which when executed by a computer, causes the computer to implement the steps according to any of the Claims 1 to 21.

25. A computing system comprising input device, memory, graphic processing unit (GPU), and an output device, configured to execute the process steps according to any one of the Claims 1 to 21.

**Amended claims in accordance with Rule 137(2) EPC.**

1. A process for applying style images $I_{Sj}$ to a content image $I_C$ containing entity classes $i$ (i: 1, 2, ...M) comprising the steps of:

- providing a plurality of $j$ style images ($I_{Sj}$: $I_{S1}$, $I_{S2}$, ......$I_{SN}$), each containing entity classes $i$ (i: 1, 2, ...M);
- for each entity class $i$,

   a) for each style image $I_{Sj}$ of the plurality of style images ($I_{Sj}$: $I_{S1}$, $I_{S2}$, ......$I_{SN}$), computing a parameter $\lambda_{ij}$, representing the similarity between each style image $I_{Sj}$ and the content image $I_C$;
   b) selecting, from the plurality of style images $I_{Sj}$, the style image $I_{SW}$ with the parameter $\lambda_{iW}$ representing the highest said similarity;
   c) stylising the content image $I_C$, by applying the selected style image $I_{SW}$ to the content image $I_C$, to generate a stylised content image $I_{CSi}$;

2. A process as in Claim 1, wherein the step of computing the parameter $\lambda_{ij}$ comprises computing

$$\lambda_{ij} = \frac{1}{\left| \log\left( \frac{C_i}{S_{ij}} \right) \right|}$$

wherein, in the above equation, $C_i$ and $S_{ij}$ are the number of pixels labelled as $i$ on $I_C$ and $I_{Sj}$ correspondingly, and the selecting step comprises selecting the style image $I_{SW}$ with the highest value of $\lambda_{iW}$ for each $i$-value.

3. A process as in Claim 1, wherein the parameter $\lambda_{ij}$ relates inversely to said similarity and the selecting step comprises selecting the style image $I_{SW}$ with the smallest value of $\lambda_{ij}$ for a given $i$-value.

4. A process as in Claim 3, wherein the step of computing the parameter $\lambda_{ij}$ comprises computing

$$\lambda_{ijk} = \left| \log\left( \frac{C_{ik}}{S_{ijk}} \right) \right|$$

wherein, in the above equation, $C_i$ and $S_{ij}$ are the number of pixels labelled as $i$ on $I_C$ and $I_{Sj}$ correspondingly, and the selecting step comprises selecting the style image $I_{SW}$ with the lowest value of $\lambda_{iW}$ for each $i$-value.

**5.** A process as in any one of Claims 1 or 3, wherein the step of computing the parameter $\lambda_{ij}$ comprises computing a similarity parameter $\lambda_{ij}$ comprising constituent parameters other than the number of pixels labelled as $i$ on $I_C$ and $I_{Sj}$.

**6.** A process as in Claim 5 wherein the constituent parameters comprise the number of entities labelled as $i$ in the content image $I_C$ and in the style images $I_{Sj}$.

**7.** A process as in Claim 5 wherein the constituent parameters comprise the size of the entities of a particular class $i$ in the content image $I_C$ and in the style images $I_{Sj}$.

**8.** A process as in any preceding claims, wherein the values of the parameter $\lambda_{ij}$ are elements of an $i$-$j$ matrix with $i$ rows and $j$ columns.

**9.** A process as in any preceding claim, the process further comprising:

- for each further entity class $i$, where i>1,

  d)
  e)
  f) generating a stylised content image $I_{CSi}$, by applying the selected style image $I_{SW}$ to the stylised content image $I_{CS\,i-1}$ of the preceding $i$-value.

- and deriving, for the final entity class $i$=$M$, a final stylised content image $I_{CSM}$.

**10.** A process as in any preceding claim, wherein $i$ =1 and M=1 and for this class, there is no associated entity.

**11.** A process as in any preceding claim, further comprising the steps of:

- splitting, by area, the content image $I_C$ into a plurality $k$ of content patches ($P_{Ck}$: $P_{C1}$, $P_{C2}$, ... $P_{CZ}$),
- splitting, by area, each of the $j$ style images $I_{Sj}$ into a plurality $k$ of style patches ($P_{Sjk}$: $P_{Sj1}$, $P_{Sj2}$, ... $P_{Sjz}$), wherein, for each value of k, the content patch $P_{Ck}$ is paired with the corresponding $j$ style patches $P_{Sjk}$ to form a content-style patch group ($P_{Ck}$ - $P_{Sik}(P_{S1k}, P_{S2k}, ... P_{SNk})$),
- wherein, for each of the k content-style patch groups ($P_{Ck}$ - $P_{Sjk}(P_{S1k}, P_{S2k}, ... P_{SNk})$), the following steps are performed

  a) for an entity class $i$, computing a parameter $\lambda_{ijk}$ representing the similarity between style patch $P_{Ck}$ and each of the $j$ style patches ($P_{Sjk}$: $P_{S1k}, P_{S2k}, ... P_{SNk}$);

  b) selecting, from the plurality of $j$ style patches $P_{Sjk}$, the style patch $P_{SWk}$ with the parameter $\lambda_{ijk}$ representing the highest said similarity;

  c) a stylising the content patches ($P_{CSik}$), by applying the selected style patch ($P_{SWk}$) to the content patch ($P_{Ck}$) to generate stylised content patches ($P_{CSik}$)

  d) incrementing $i$ to $i$+1, and, based on each stylised content patch $P_{CSik}$ of the preceding entity class $i$, repeating the above steps (a) to (c) to generate a further stylised content patch $P_{CS\,i+1k}$, and

  e) repeating the incrementing at (d) until $i$=$M_k$, and deriving, for the final entity class $i$=$M_k$, final stylised content patches $P_{CS\,Mk}$;

- recombining the $k$ final stylised content patches $P_{CSMk}$, where k varies from 1 to Z, into a single final stylised content image $I_{CS}$

**12.** A process as in Claim 11, wherein the step of computing the parameter $\lambda_{ijk}$ comprises computing

$$\lambda_{ijk} = \frac{1}{\left| \log\left(\frac{C_{ik}}{S_{ijk}}\right) \right|}$$

wherein, in the above equation, $C_{ik}$ and $S_{ijk}$ are the number of pixels labelled as $i$ on $P_{Ck}$ and $P_{Sjk}$ correspondingly, and the selecting step comprises selecting the style patch $P_{SWk}$ with the highest value of $\lambda_{iWk}$ for each $i$-value.

**13.** A process as in Claim 11, wherein the parameter $\lambda_{ijk}$ relates inversely to said similarity and the selecting step comprises selecting the style patch $P_{SWk}$ with the lowest value $\lambda_{ijk}$ for a given $i$-value.

**14.** A process as in Claim 13 wherein the step of computing the parameter $\lambda_{ijk}$ comprises computing

$$\lambda_{ijk} = \left| \log\left(\frac{C_{ik}}{S_{ijk}}\right) \right|$$

wherein, in the above equation, $C_{ik}$ and $S_{ijk}$ are the number of pixels labelled as $i$ on $P_{Ck}$ and $P_{Sjk}$ correspondingly, and the selecting step comprises selecting the style patch $P_{SWk}$ with the lowest value of $\lambda_{iWk}$ for each $i$-value.

**15.** A process as in any one of Claims 11 or 13, wherein the step of computing the parameter $\lambda_{ijk}$ comprises computing a similarity parameter $\lambda_{ijk}$ comprising constituent parameters other than the number of pixels labelled as $i$ on $P_{Ck}$ and $P_{Sjk}$.

**16.** A process as in Claim 15 wherein the constituent parameters comprise the number of entities labelled as $i$ in the content patch $P_{Ck}$ and in the style patches $P_{Sjk.}$

**17.** A process as in Claim 16 wherein the constituent parameters comprise the size of the entities of a particular class $i$ in the content patch $P_{Ck}$ and in the style patches $P_{Sjk.}$

**18.** A process as in any of Claims 11 to 17 wherein $Z = 1$ and there is a single $k$-value.

**19.** A process as in any of Claims 11 to 18 wherein the number of $i$-values, M, in each patch k, is one.

**20.** A process as in any of Claims 11 to 19 wherein the patches in each content-style patch group are of unequal size and contain different numbers of pixels.

**21.**

**22.** A computer program product comprising program code instructions stored on a computer readable medium to execute the process steps according to any one of the Claims 1 to 20 when said program is executed on a computing system.

**23.** A process implemented by a computer comprising the steps of any of Claims 1 to 20.

**24.** A computer-readable storage medium comprising instructions, which when executed by a computer, causes the computer to implement the steps according to any of the Claims 1 to 20.

**25.** A computing system comprising input device, memory, graphic processing unit (GPU), and an output device, configured to execute the process steps according to any one of the Claims 1 to 20.

Figure 1

Figure 2

EP 4 057 228 A1

Figure 3

# Figure 4

401

402

Figure 5

START  501

INPUT
Content Image
$I_C$  502

INPUT
Style images
$\{I_{S1},...,I_{SN}\}$  503

$\overset{Z}{\underset{k=1}{U}} P_{Ck} \leftarrow I_C$  502A

$k \leftarrow 1$  504

$\overset{Z}{\underset{k=1}{U}} P_{Sjk} \leftarrow I_{Sj}$  503A

$P_{CSik} \leftarrow P_{Ck}$
$i \leftarrow 1$  505

compute
$\lambda_{ijk}$  506

$W = argmax_j (\lambda_{ijk})$  507

$P_{CSik} \leftarrow Stylize(P_{CSik}, P_{SWk}, i)$  508

$i \leftarrow i+1$  509

NO  $i = M_k$  510

YES

$k \leftarrow k+1$  511

$k = Z$  512  NO

YES

$I_{CS} \leftarrow \overset{Z}{\underset{k=1}{U}} P_{CSMk}$  513

Output
$I_{CS}$  514

END  516

Europäisches
Patentamt

European
Patent Office

Office européen
des brevets

**EUROPEAN SEARCH REPORT**

Application Number

EP 21 16 1894

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/244060 A1 (DUNDAR AYSEGUL [US] ET AL) 8 August 2019 (2019-08-08) * abstract * * figure 2A * * paragraph [0047] - paragraph [0069] * * Equation 5; paragraph [0132] - paragraph [0160] * | 1-25 | INV. G06T11/00 |
| X | CHEN DONGDONG ET AL: "StyleBank: An Explicit Representation for Neural Image Style Transfer", 2017 IEEE CONFERENCE ON COMPUTER VISION AND PATTERN RECOGNITION (CVPR), IEEE COMPUTER SOCIETY, US, 21 July 2017 (2017-07-21), pages 2770-2779, XP033249622, ISSN: 1063-6919, DOI: 10.1109/CVPR.2017.296 [retrieved on 2017-11-06] * abstract * * figure 1 * | 1,22-25 | |
| X | WO 2018/075927 A1 (GOOGLE LLC [US]) 26 April 2018 (2018-04-26) * abstract * * paragraph [0014] - paragraph [0017] * * paragraph [0036] - paragraph [0045] * * paragraph [0061] - paragraph [0063] * | 1,22-25 | TECHNICAL FIELDS SEARCHED (IPC) G06T |
| A | YIJUN LI ET AL: "A Closed-form Solution to Photorealistic Image Stylization", ARXIV.ORG, CORNELL UNIVERSITY LIBRARY, 201 OLIN LIBRARY CORNELL UNIVERSITY ITHACA, NY 14853, 19 February 2018 (2018-02-19), XP081239699, * the whole document * | 1-25 | |

The present search report has been drawn up for all claims

| Place of search | Date of completion of the search | Examiner |
|---|---|---|
| Munich | 27 September 2021 | Leclercq, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 16 1894

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2021

| Patent document cited in search report | Publication date | Patent family member(s) | Publication date |
|---|---|---|---|
| US 2019244060 A1 | 08-08-2019 | NONE | |
| WO 2018075927 A1 | 26-04-2018 | CN 109863537 A | 07-06-2019 |
| | | EP 3526770 A1 | 21-08-2019 |
| | | US 2019236814 A1 | 01-08-2019 |
| | | US 2020082578 A1 | 12-03-2020 |
| | | WO 2018075927 A1 | 26-04-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YIJUN LI.** A Closed-form Solution to Photorealistic Image Stylization. University of California, 27 July 2018